# EUROPEAN PATENT APPLICATION

(11) **EP 4 599 964 A1**
(43) Date of publication of application: **13.08.2025**
(21) Application number: 24220849.4
(22) Date of filing: 18.12.2024
(51) Int. Cl.: B23B 51/06, B23B 27/00, B23B 27/10, B23B 27/14

(54) **CUTTING TOOL BODY AND CUTTING TOOL**

(30) Priority: 06.02.2024 JP 2024016063
(71) Applicant: Tungaloy Corporation, Iwaki-shi, Fukushima 970-1144 (JP)
(72) Inventor: SASAKI, Ryou, Iwaki-shi, Fukushima 970-1144 (JP)
(74) Representative: Vossius & Partner Patentanwälte Rechtsanwälte mbB

(57) **Abstract**

A body of a cutting tool has: an insert pocket in which a cutting insert is mounted; a screw hole into which an insert mounting screw for fastening the cutting insert to the insert pocket is screw-inserted; and a chip removal coolant flow path for allowing coolant C to be discharged through a discharge port that is open at a leading end of the body, wherein at least a part of the chip removal coolant flow path is at respective distances Da, Db and Dc from the insert pocket, from the screw hole, and from the periphery of the body, in a cross-section perpendicular to the axial direction of the body, wherein each of the distances Da, Db and Dc is equal to or greater than a predetermined size.

## Description

### Background

### Field

The present invention relates to a cutting tool body and a cutting tool.

### Description of Related Art

Cutting tools for use in drilling and turning are described in JP7290206 B. Further, cutting tools equipped with a fluid flow path can be seen in WO2019/069924, and cutting tools having a flow path which is open at the leading end of the tool are disclosed in JP2007-185765 A and JP2016-128195 A.

The leading end portion of a cutting tool body includes an insert pocket for mounting a cutting insert therein, and a fastening portion, such as a screw hole, for fastening the cutting insert to the body, meaning that space is limited in such leading end portion of the body. For this reason, it is difficult to provide a flow path that is open at the leading end of the body while having a sufficient cross-sectional area of the flow path and suppressing degradation of rigidity at the same time.

### Summary

The present invention has been made in view of the above-described circumstances, and an object of the invention is to provide a cutting tool body and a cutting tool, provided with a flow path having a sufficient cross-sectional area while ensuring adequate rigidity.

According to an aspect of the present invention, a body of a cutting tool has: an insert mounting seat on which a cutting insert is mounted; a fastening portion into which a fastening component for fastening the cutting insert onto the insert mounting seat is inserted; and a flow path for allowing fluid to be discharged through a discharge port that is open at a leading end of the body, wherein at least a part of the flow path is at respective distances from the insert mounting seat, from the fastening portion, and from the periphery of the body, in a cross-section perpendicular to an axial direction of the body, wherein each of the distances is equal to or greater than a predetermined size.

Cutting tools used for hole machining generally need to have a body whose diameter is smaller than that of a hole that is to be machined by the tool. It is difficult for such hole machining cutting tools to supply coolant from the outside into a hole being machined and to remove chips out of the hole being machined, and it is accordingly desirable to provide a flow path capable of ejecting coolant from the leading end of the body. When a body having an insert mounting seat on which a cutting insert is mounted and a fastening portion, such as a screw hole, into which a fastening component is screwed so as to fasten the cutting insert onto the insert mounting seat, is further provided with a flow path for discharging fluid through a discharge port that is open at the leading end of the body, a part of such flow path needs to pass through a narrow zone surrounded by the insert mounting seat, the fastening portion, and the periphery of the body. In this regard, the body of the above-mentioned structure is designed such that at least a part of the flow path having a discharge port at the leading end of the body is situated at respective distances from the insert mounting seat, from the fastening portion, and from the periphery of the body in a cross-section perpendicular to the axial direction of the body, wherein each of the distances is equal to or greater than a predetermined size. With this configuration, the body can be provided with a flow path having a maximized cross-sectional area, while suppressing the degradation of rigidity. Such body can accordingly be improved in terms of cooling the cutting insert and removing chips, so that clogging due to chips can be suppressed.

Each of the distance from the insert mounting seat, the distance from the screw hole, and the distance from the periphery of the body may be 0.1 mm or more and 0.5 mm or less.

The distance from the insert mounting seat, the distance from the screw hole, and the distance from the periphery of the body may be almost the same size.

At least a part of the flow path may have a substantially triangular shape in a cross-section perpendicular to the axial direction.

At least a part of the periphery of the body may have a circular-arc-shaped portion in a cross-section perpendicular to the axial direction, and at least a part of the flow path may have a substantially fan-like shape in the cross-section, the fan-like shape including a circular-arc-shaped portion that conforms to the periphery of the body.

The discharge port may have a different shape from the shape of at least a part of the flow path in a cross-section perpendicular to the axial direction.

A part of the flow path that continues to the discharge port may extend away from the insert mounting seat while being curved along the periphery of the fastening portion.

The body may have another flow path that is open at a base end side of the insert mounting seat.

A cutting tool according to an aspect of the present invention comprises a body of the above-described configuration.

### Brief Description of Drawings

Fig. 1 is a perspective view of a cutting tool according to an embodiment of the present invention.
Fig. 2 is a perspective view of a body.
Fig. 3 is a perspective view of a body, showing the internal structure of the body in a transparent view.
Fig. 4 is a perspective view of a leading end portion of the body, showing the internal structure of the leading end portion in a transparent view.
Fig. 5 is a cross-sectional view of a leading end portion of a cutting tool, taken perpendicularly with respect to the axial direction of the tool.
Fig. 6 is a perspective view of a leading end portion of a cutting tool.
Fig. 7 is an illustration explaining the situation inside a workpiece (a material to be cut) when the workpiece is being drilled.

### Detailed Description

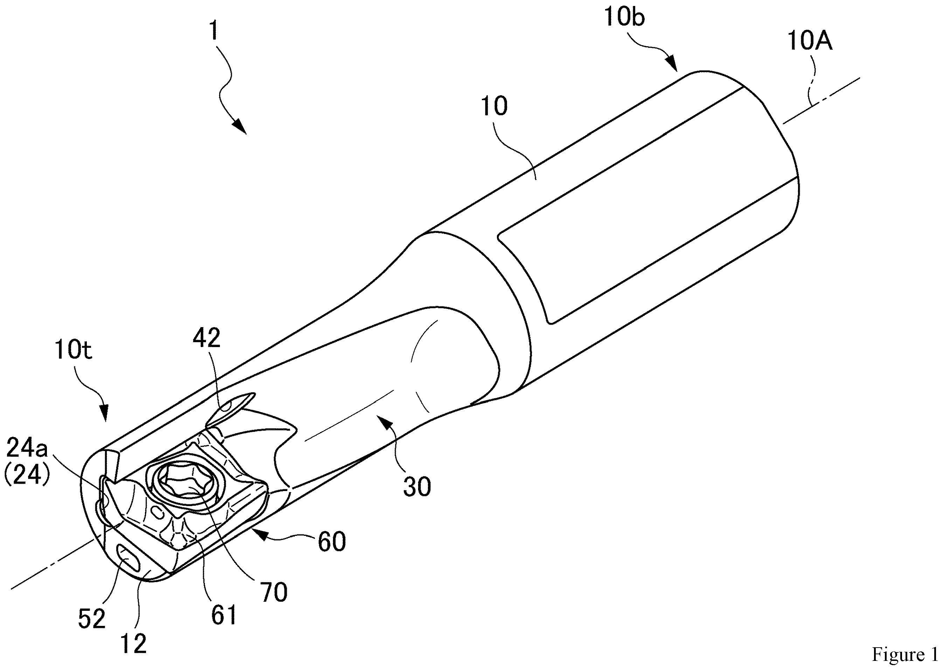

Preferred embodiments of a cutting tool body and a cutting tool according to the present invention will now be described in detail, with reference to the attached drawings (see Figs. 1-7).

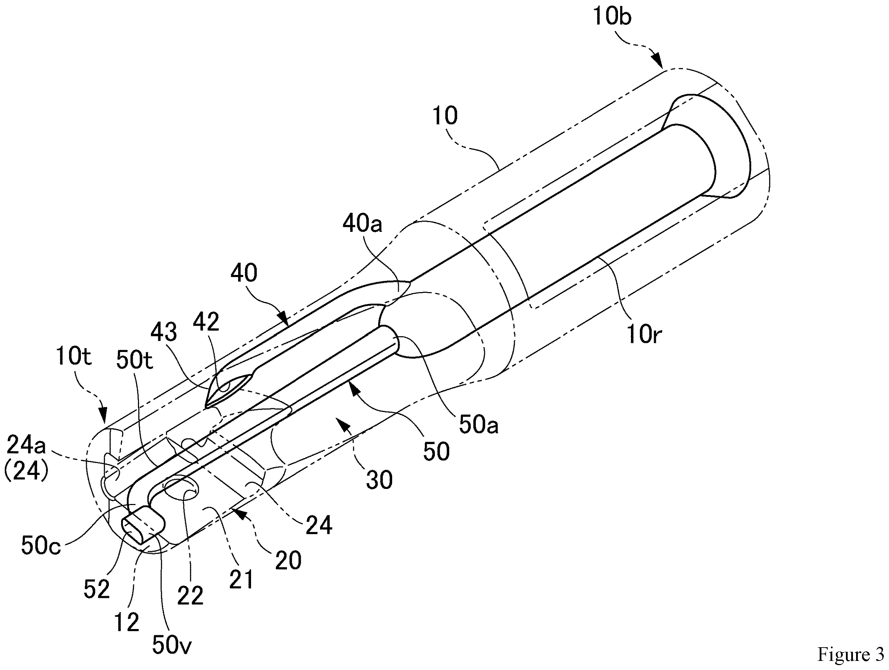

A cutting tool 1 of the present embodiment is configured as a multi-functional tool that can be used for both drilling and turning for inner and outer diameter machining (i.e., a drilling/turning composite tool). A body (sometimes also referred to as a "holder") 10 of the cutting tool 1 is provided with an insert pocket (insert mounting seat) 20, a pocket, and two coolant flow paths (which are a coolant flow path 40 for cooling the cutting edge and a coolant flow path 50 for removal of chips) (see Fig. 3, etc.).

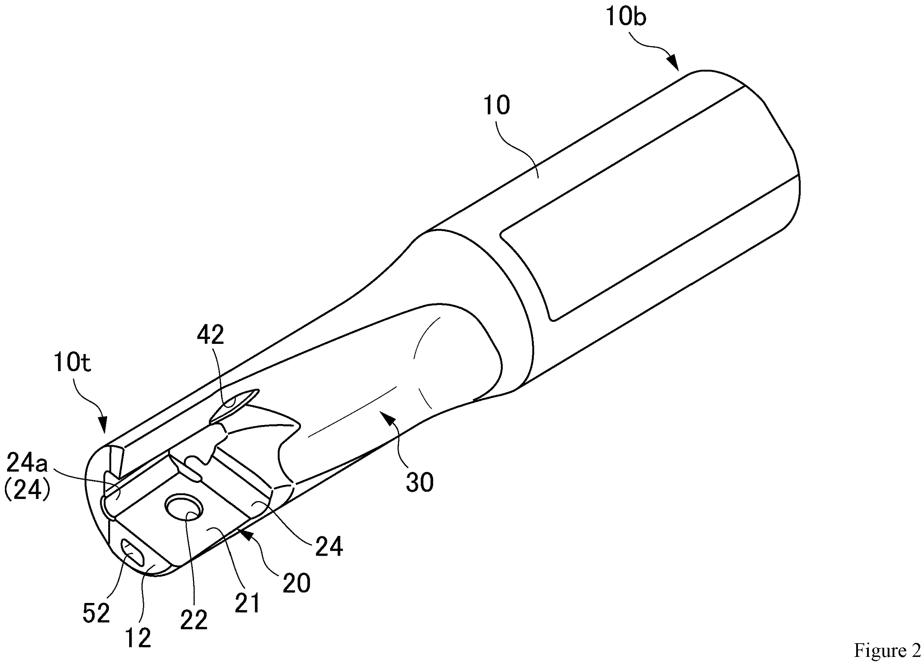

The insert pocket 20 serves as an insert mounting seat on which a cutting insert 60 is mounted, and such insert pocket 20 is formed at a leading end portion 10t along the central axis 10A of the body 10 (see Figs. 2-4, etc.). A screw hole (fastening portion) 22 in which an insert mounting screw 70 is fitted is provided in a seat 21 of the insert pocket 20 (see Figs. 2-4, etc.). Further, a clearance part 24 is formed at a corner of the insert pocket 20 so that the insert pocket does not come into contact with the intersecting edge between the bottom and side surfaces of the cutting insert 60 (see Figs. 2-4, etc.).

The pocket is a recessed part that is formed so as to extend from the insert pocket 20 toward the base end portion 10b of the body 10. In the cutting tool 1 of the present embodiment, such pocket is configured as a chip removal groove 30 for guiding and removing chips generated during cutting. The following description will explain an embodiment having such chip removal groove 30 as a specific example of the pocket (see Fig. 1, etc.).

### Chip Removal Coolant Flow Path (Flow Path)

The coolant flow path 50 for removal of chips is one of the two coolant flow paths provided in the body 10 and it is provided mainly as a flow path for supplying coolant C for improving the chip removal capability during cutting (see Fig. 3, etc.). The chip removal coolant flow path 50 is in communication with a supply path 10r provided on a base end portion 10b side of the body 10 (see Fig. 3, etc.). A discharge port 52 is formed at an appropriate position for improving the chip removal capability, such as on an end surface 12 on the leading end portion 10t side of the body 10 near the seat 21 (for example, a radially outward position of the body 10 relative to the seat 21) (see Figs. 1-4, etc.).

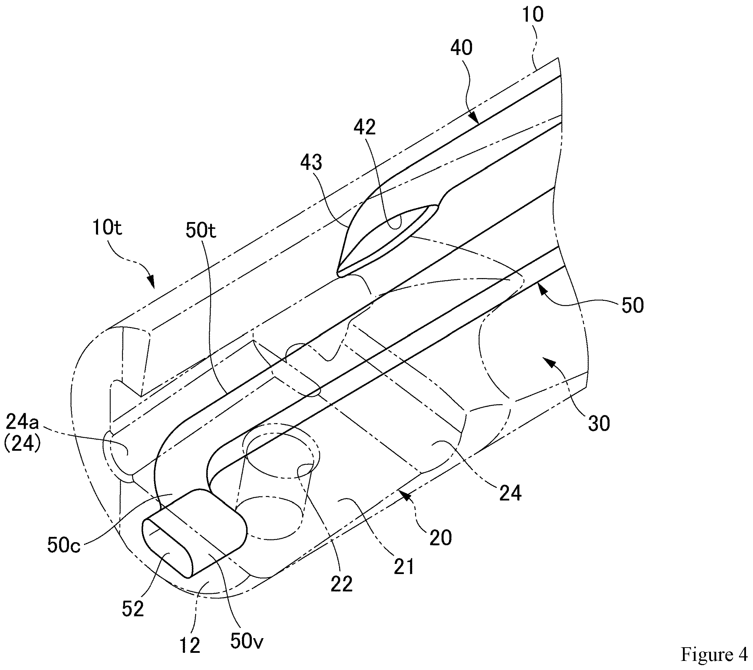

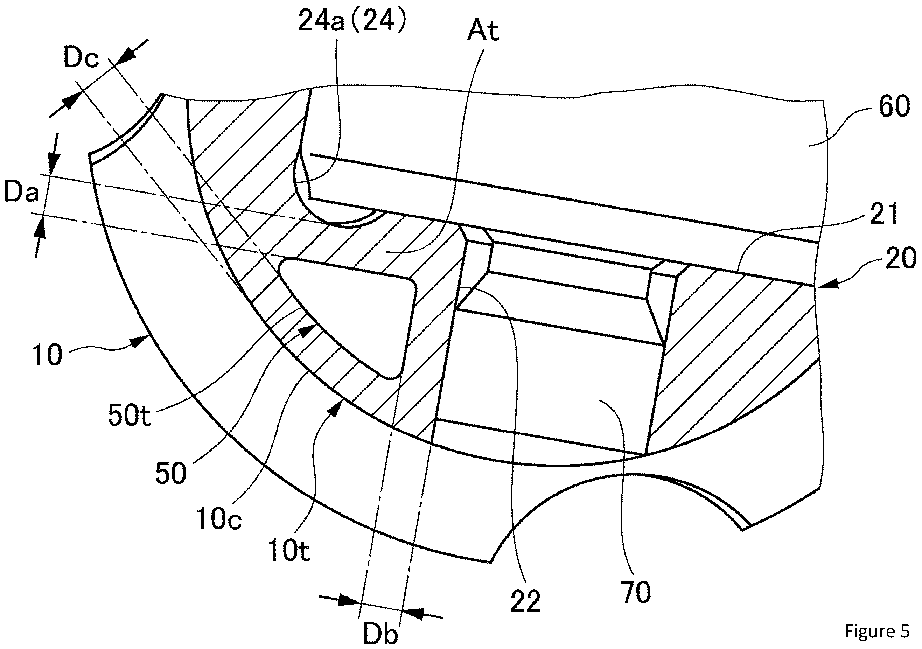

The chip removal coolant flow path 50 forms a leading end flow path portion 50t at the leading end portion 10t of the body 10 (see Figs. 4, 5, etc.) In a cross-section perpendicular to the central axis 10A of the body 10 and passing through at least part of the central axis of the screw hole 22, the leading end flow path portion 50t is located at a distance Da from the insert pocket 20, a distance Db from the screw hole 22, and a distance Dc from the periphery 10c of the body 10, each distance being equal to or greater than a predetermined size (see Fig. 5, etc.). In the leading end flow path portion 50t of the chip removal coolant flow path 50, such distances Da, Db and Dc are the shortest distances from the insert pocket 20, from the screw hole 22, and from the periphery 10c of the body 10, respectively. Since the insert pocket 20 has a clearance part 24a at a corner thereof, the distance Da from the insert pocket 20 refers to the shortest distance from such clearance part 24a of the insert pocket 20. In this example, the distance Da from the insert pocket 20, the distance Db from the screw hole 22, and the distance Dc from the periphery 10c of the body 10, are each almost the same size. However, the almost same size does not necessarily mean a completely equal size and the distances may be approximate sizes with a slight difference among them. When the distances Da, Db and Dc are each 0.1 mm or more, the body 10 having such leading end flow path portion 50t can be made without problems. Meanwhile, when the distances Da, Db and Dc are each 0.5 mm or less, an appropriate cross-sectional area of the flow path can be attained. These distances Da, Db and Dc are more preferably 0.3 mm from among the range of 0.1 mm or more and 0.5 mm or less. Since force is applied to each part of the body 10 in a different manner, such as stress being concentrated on a certain part, it is preferable for the distances Da, Db and Dc to have different sizes from one another.

The cutting tool 1 used for hole machining typically needs to be designed so that the diameter of the body 10 is smaller than that of a hole to be machined. For this reason, when the body 10 has the insert pocket 20 on which a cutting insert 60 is mounted and also has the screw hole 22 into which an insert mounting screw 70, being a fastening component for fastening the cutting insert 60 to the insert pocket 20, is inserted, the area surrounded by such insert pocket 20, screw hole 22, and the periphery 10c of the body 10 is narrowed. Meanwhile, in the cutting tool 1 used for hole machining, it is difficult to supply coolant C into a hole being machined from the outside and to remove chips out of the hole. It is therefore desirable to eject coolant C from the leading end of the body 10. When the chip removal coolant flow path 50 is provided so as to allow coolant C to be discharged from the discharge port 52 that is open at the leading end of the body 10, a part of the leading end flow path portion 50t of the chip removal coolant flow path 50 needs to be passed through a narrow zone At which is surrounded by the insert pocket 20, the screw hole 22, and the periphery 10c of the body 10 (see Fig. 5, etc.). In this regard, according to the body 10 of the present embodiment, in a cross-section obtained around the narrow zone At by cutting perpendicularly with respect to the axial direction, the leading end flow path portion 50t is located at a distance Da from the insert pocket 20, a distance Db from the screw hole 22, and a distance Dc from the periphery 10c of the body 10, with the distances Da, Db and Dc being equal to or greater than a predetermined size. With this configuration, the cross-sectional area of the flow path in the leading end flow path portion 50t of the chip removal coolant flow path 50 can be maximized while suppressing the degradation of the rigidity of the body 10. Accordingly, the above configuration improves the capabilities of cooling the cutting insert 60 and removing chips through the use of coolant C discharged from the discharge port 52, and as a result, clogging due to chips can be suppressed.

Such leading end flow path portion 50t of the chip removal coolant flow path 50 has a substantially triangular cross-section (see Fig. 5, etc.). In particular, the periphery 10c side of the leading end flow path portion 50t is formed in a circular-arc shape that conforms to the periphery 10c of the body 10. As a result, the cross-section of the leading end flow path portion 50t is in a substantially fan-like shape. By configuring the cross-section of the leading end flow path portion 50t in a substantially triangular shape and further in a substantially fan-like shape, a large cross-sectional area of the flow path can be ensured in the narrow zone At surrounded by the insert pocket 20, the screw hole 22, and the periphery 10c of the body 10.

After passing through the narrow zone At, the leading end flow path portion 50t of the chip removal coolant flow path 50 forms a curved path 50c, which is a portion of the flow path on the leading end side of the body 10 relative to the narrow zone At and extends away from the seat 21 of the insert pocket 20 while being curved along the periphery of the screw hole 22. In this curved path 50c as well, the leading end flow path portion 50t has a substantially triangular cross-section. It should be noted that the cross-section of the chip removal coolant flow path 50 is also substantially triangular in shape on the base end portion 10b side relative to the leading end flow path portion 50t.

The chip removal coolant flow path 50 is open at the end surface 12 on the leading end portion 10t side of the body 10, and includes a discharge path 50v, with such opening serving as the discharge port 52 (see Figs. 3, 4, etc.). The discharge path 50v also extends slightly towards the base end portion 10b of the body 10 along the axial direction of the body 10. The curved path 50c, which continues to the leading end flow path portion 50t, is in communication with one side of the rear end of the discharge path 50v opposite to the discharge port 52. With this configuration, the leading end flow path portion 50t can be smoothly connected to the discharge path 50v, so that a pressure loss at the leading end flow path portion 50t can be reduced.

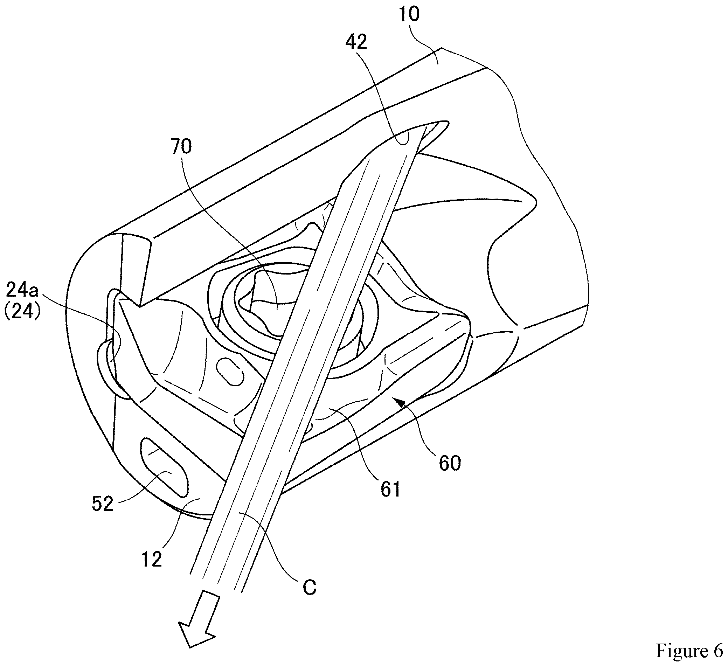

The discharge port 52 of the chip removal coolant flow path 50 has a different shape from the cross-sectional shape of the leading end flow path portion 50t of the chip removal coolant flow path 50. For example, the discharge port 52 may have an elliptical shape which is long in the direction parallel to the seat 21 of the insert pocket 20 when viewed from the leading end of the body 10 (see Figs. 4, 6, etc.). The cross-sectional shape of the discharge path 50v having such discharge port 52 is the same as the shape of the discharge port 52 throughout the length direction of the discharge path 50v. By configuring the discharge port 52 in a different shape from the cross-sectional shape of the leading end flow path portion 50t of the chip removal coolant flow path 50, the discharge direction of coolant C can be adjusted and the discharge velocity of coolant C can be increased. For example, an elliptically-shaped discharge port 52 allows coolant C to be discharged at an increased velocity in a well-balanced manner. Further, a discharge port 52 in an elliptical shape that is long in the direction parallel to the seat 21 of the insert pocket 20 as described above may be advantageous for achieving both rigidity and a sufficient supply of coolant while considering the clearance between the periphery 10c of the body 10 and the insert pocket 20 (in other words, the thickness of the portion around this area of the body 10).

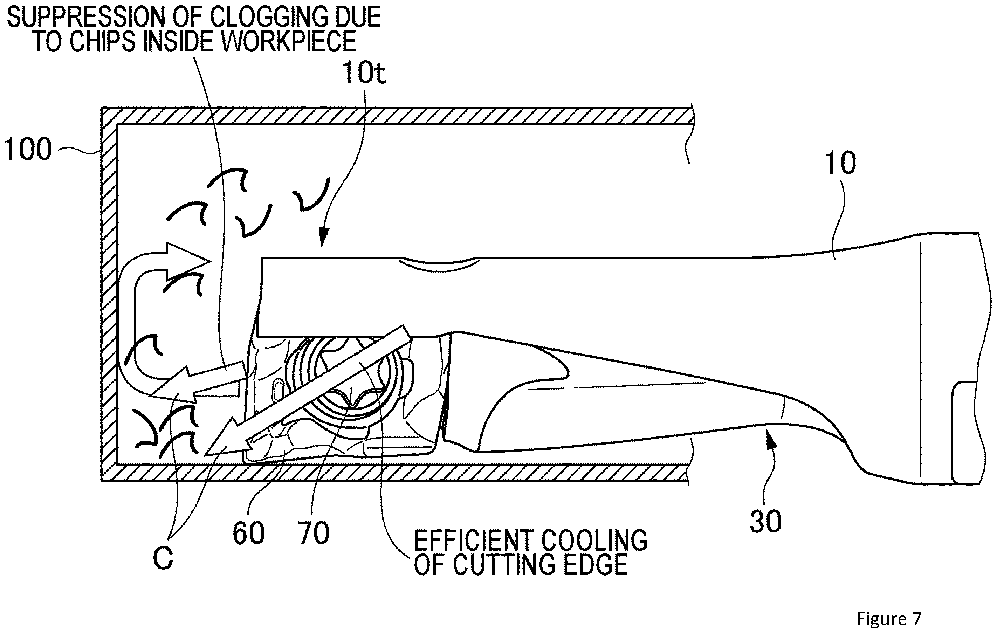

The chip removal coolant flow path 50 is formed so that the cross-sectional area of the discharge port 52 is smaller than that of a communicating portion 50a that communicates with the supply path 10r. The chip removal coolant flow path 50 according to the present embodiment is shaped so as to at least partly include a portion whose cross-sectional area of the flow path gradually decreases from the supply port 51 toward the discharge port 52 (see Figs. 3, 4, etc.). In this configuration, the chip removal coolant flow path 50 does not include a portion whose cross-sectional area decreases abruptly. Since the chip removal coolant flow path 50 does not include a portion involving an abrupt decrease of the cross-sectional area, while having a portion whose cross-sectional area of the flow path gradually decreases, a pressure loss caused to a flow of coolant C will be relatively small, so that coolant C can be supplied with increased efficiency toward the cutting site, leading to the suppression of clogging due to chips within a workpiece (a material to be cut) 100 (see Fig. 7). Moreover, the chip removal coolant flow path 50 of the present embodiment is formed with a single flow path having no branch on the way from the communicating portion 50a until the discharge port 52 (see Fig. 7), so that the flow path does not generate loss (branch loss) that would otherwise occur due to the existence of a branch. Accordingly, the configuration of the present embodiment is able to further reduce a pressure loss caused to a flow of coolant C and to thereby supply coolant C in a more efficient manner.

The chip removal coolant flow path 50 of the cutting tool 1 according to the present embodiment has such a shape that it is slightly curved on the way from the communicating portion 50a that communicates with the supply path 10r toward the leading end portion 10t of the body 10 and, near the leading end portion 10t, it is also curved around the screw hole 22 of the body 10 so as to circumvent the screw hole 22 and then reaches the discharge port 52 near the cutting edge 61 (see Figs. 3, 4, etc.), although the chip removal coolant flow path 50 may be formed in a substantially linear manner from the communicating portion 50a toward the leading end portion 10t. To circumvent the screw hole 22, the chip removal coolant flow path 50 may be shaped so as to extend in a direction away from the clearance part 24 (more specifically, such clearance part 24 is formed so as to avoid contact with a peripheral cutting edge of the cutting insert 60 that is not used as the cutting edge 61, as indicated by reference numeral 24a in Figs. 2-4), so as to enhance rigidity around this portion (see Figs. 2-4, etc.).

### Coolant Flow Path for Cooling Cutting Edge (Another Flow Path)

The coolant flow path 40 for cooling the cutting edge is the other one of the two coolant flow paths provided in the body 10 and it is formed mainly as a flow path for supplying coolant C for cooling the cutting edge 61 of the cutting insert 60 (see Figs. 1, 3, etc.). Such coolant flow path 40 for cooling the cutting edge is formed so as to extend as a branch from the supply path 10r which is provided on the base end portion 10b side of the body 10 and from which coolant C is supplied (see Fig. 3, etc.).

A discharge port 42 is provided at an appropriate position for discharging coolant C toward the cutting edge 61 of the cutting insert 60, such as at a position near the insert pocket 20 (more specifically, a position near the base end portion 10b side of the insert pocket 20, in which part of the discharge port 42 overlaps with the insert pocket 20) (see Figs. 1, 3, 6, etc.). The discharge port 42 may be circular in shape or may be non-circular so as to facilitate achieving rigidity around the discharge port 42.

The cutting edge cooling coolant flow path 40 extending as a branch from the supply path 10r may be formed so as to be substantially linear in shape toward the leading end portion 10t, or it may be non-linear in shape and include a curved portion on the way toward the leading end portion 10t. The cutting edge cooling coolant flow path 40 of the cutting tool 1 according to the present embodiment has such a shape that a branching portion 40a extends from the supply path 10r toward the periphery side of the body 10, from which the flow path extends almost linearly toward the leading end portion 10t of the body 10 and then forms a curved portion 43 immediately before the discharge port 42, which is curved so as to extend radially inward of the body 10 (see Figs. 3, 4, etc.).

The cutting edge cooling coolant flow path 40 is formed so that its cross-sectional area is smaller than the cross-sectional area of the supply path 10r. The specific shape of such flow path from the branching portion 40a until the discharge port 42 is not particularly limited; however, the cutting edge cooling coolant flow path 40 according to the present embodiment is preferably shaped so as to at least partly include a portion whose cross-sectional area of the flow path gradually decreases from the branching portion 40a toward the discharge port 42. In such configuration, the cutting edge cooling coolant flow path 40 does not include a portion whose cross-sectional area decreases abruptly. Since the cutting edge cooling coolant flow path 40 does not include a portion involving an abrupt decrease of the cross-sectional area, while having a portion whose cross-sectional area of the flow path gradually decreases as described above, a pressure loss caused to a flow of coolant C will be relatively small, so that coolant C can be supplied with increased efficiency toward the cutting site, and the cutting site can be efficiently cooled and lubricated while increasing the flow velocity of coolant C in the middle of the flow path, thereby contributing to suppressing abrasion of the cutting insert 60 (see Figs. 6, 7, etc.).

According to the above-described body 10 and cutting tool 1 of the present embodiment, the leading end flow path portion 50t of the chip removal coolant flow path 50, which is passed through the narrow zone At surrounded by the insert pocket 20, the screw hole 22, and the periphery 10c of the body 10, is located at respective distances Da, Db and Dc from the insert pocket 20, the screw hole 22, and the periphery 10c of the body 10, wherein each of such distances is equal to or greater than a predetermined size. This configuration can ensure that the chip removal coolant flow path 50 has a maximized cross-sectional area of the flow path, while suppressing degradation of rigidity at the leading end portion of the body 10. Accordingly, the configuration can improve the capabilities of cooling the cutting insert 60 and removing chips through the use of coolant C discharged from the discharge port 52, and as a result, clogging due to chips can be suppressed.

Furthermore, in addition to improving the capability of removing chips within the workpiece 100 through the use of coolant C discharged through the chip removal coolant flow path 50 toward the end surface located within the workpiece 100 and thereby suppressing clogging caused due to chips, the body 10 and the cutting tool 1 according to the present embodiment also improve the capability of cooling the cutting site through the use of the coolant flow path 40 for cooling the cutting edge (see Fig. 7).

Such structures as described in the present embodiment may also be applied to a cutting tool 1 for small-diameter machining or a body 10 of such cutting tool 1. More specifically, although some conventional tools or conventional methods for producing such tools do not allow for freely designing coolant flow paths for the tools, the cutting tool 1 or the body 10 as described in the present embodiment can employ, for example, 3D printing methods so as to freely design flow paths, thereby realizing the shapes, positions and forms of the flow paths that may provide features as described above.

The above-described embodiment is an example of preferred embodiments of the present invention, and the present invention is not limited to this example and may be modified in various ways without departing from the spirit thereof. For example, the above embodiment describes an example in which the body 10 and the cutting tool 1 have a pocket which serves as a chip removal groove 30 for guiding and removing chips generated during cutting; however, this is merely a suitable example and the present invention may also be applied to a cutting tool 1, etc. having a pocket that serves as an element other than the chip removal groove 30.

Moreover, the cutting tool 1 and the body 10 of such cutting tool 1 described in the above embodiment are particularly suitable to be applied to a multi-functional tool capable of both drilling and turning for inner and outer diameter machining (i.e., a drilling/turning composite tool); however, it will be obviously understood that the present invention may also be applied to tools other than multi-functional tools.

The present invention is suited for use in a cutting tool body and a cutting tool.

The present invention provides a cutting tool body and a cutting tool, provided with a flow path having a sufficient cross-sectional area while ensuring adequate rigidity.

## Claims

1. A body of a cutting tool, comprising:
an insert mounting seat on which a cutting insert is mounted;
a fastening portion in which a fastening component for fastening the cutting insert onto the insert mounting seat is inserted; and
a flow path for allowing fluid to be discharged through a discharge port that is open at a leading end of the body,
wherein at least a part of the flow path is at respective distances from the insert mounting seat, from the fastening portion, and from a periphery of the body, in a cross-section perpendicular to an axial direction of the body, wherein each of the distances is equal to or greater than a predetermined size.

2. The body according to claim 1, wherein the distance from the insert mounting seat, the distance from the fastening portion, and the distance from the periphery of the body are each 0.1 mm or more and 0.5 mm or less.

3. The body according to claim 1 or 2, wherein the distance from the insert mounting seat, the distance from the fastening portion, and the distance from the periphery of the body are almost the same size.

4. The body according to any one of claims 1 to 3, wherein at least a part of the flow path has a substantially triangular shape in a cross-section perpendicular to the axial direction.

5. The body according to any one of claims 1 to 4, wherein at least a part of the periphery of the body has a circular-arc-shaped portion in a cross-section perpendicular to the axial direction, and at least a part of the flow path has a substantially fan-like shape in the cross-section, the fan-like shape including a circular-arc-shaped portion that conforms to the periphery of the body.

6. The body according to any one of claims 1 to 5, wherein the discharge port is different in shape from at least a part of the flow path in a cross-section perpendicular to the axial direction.

7. The body according to any one of claims 1 to 6, wherein a part of the flow path that continues to the discharge port is curved along a periphery of the fastening portion.

8. The body according to any one of claims 1 to 7, further comprising another flow path that is open at a base end side of the insert mounting seat.

9. A cutting tool comprising a body according to any one of claims 1-8.
